# EUROPEAN PATENT SPECIFICATION

(11) **EP 3 252 362 B1**
(45) Date of publication and mention of the grant of the patent: **29.01.2020**
(21) Application number: 17174380.0
(22) Date of filing: 02.06.2017
(51) Int. Cl.: F16K 49/00, F16K 1/22, F02C 7/047, F02C 7/268, F02C 7/277

(54) **HEATED STARTER AIR VALVE**
BEHEIZTES STARTERLUFTVENTIL
SOUPAPE D'AIR DE DÉMARRAGE CHAUFFÉE

(30) Priority: 02.06.2016 US 201615171557
(43) Date of publication of application: 06.12.2017
(73) Proprietor: Hamilton Sundstrand Corporation, Charlotte, NC 28217-4578 (US)
(72) Inventor: KELLY, Myles R., Willimantic, CT Connecticut 06226 (US)
(74) Representative: Dehns

(56) References cited:
- WO-A1-98/09104
- CN-A- 105 422 877
- DE-U1-202011 051 982
- JP-A- S58 131 476
- US-A- 5 462 080
- US-A- 5 485 542
- US-A- 5 499 651
- US-A1- 2008 053 401
- US-A1- 2012 067 062

## Description

### BACKGROUND OF THE DISCLOSURE

The subject matter disclosed herein relates to starter air valves and, more particularly, to heated starter air valves.

In aircrafts and other similar machines, starter air valves can be provided as parts of engines and may be oriented vertically. Such starter air valves can thus collect water due to condensation and, if the aircraft in which the starter air valve is installed sits overnight in a cold place, the collected water can freeze within the valve body. This frozen water can prevent the starter air valve from opening during start-up operations of the aircraft engines and may cause flight delays or cancelations.

One design that has been proposed for addressing the problem of frozen water in starter air valves is that drainage features are incorporated into the valve body. The drainage features can be formed as drain holes and allow collected water to flow through them out of the valve body. As such, the drainage features are capable of preventing the collected water from pooling and then freezing.

US 2012/067062 A1 discloses a prior art heated valve as set forth in the preamble of claim 1.

US 5,499,651 A discloses a prior art deicing system for a butterfly valve.

US 5,485,542 A discloses a prior art heated fluid control valve with an electric heating element and thermocouple wiring disposed in a rotatable shaft.

US 2008/053401 A1 discloses a prior art throttle device.

### BRIEF DESCRIPTION OF THE DISCLOSURE

According to one aspect of the disclosure, a heated valve is provided as recited in claim 1.

In accordance with additional or alternative embodiments, a valve actuator is coupled to the valve element and configured to drive movements thereof.

In accordance with additional or alternative embodiments, the valve body is disposable with the inlet above the outlet.

In accordance with additional or alternative embodiments, the valve body is substantially cylindrical and the valve element includes a butterfly valve.

In accordance with additional or alternative embodiments, the valve body further includes a seal ring disposable on an interior surface of an innermost one of the first and second layers.

These and other advantages and features will become more apparent from the following description taken in conjunction with the drawings.

### BRIEF DESCRIPTION OF THE DRAWINGS

The subject matter, which is regarded as the disclosure, is particularly pointed out and distinctly claimed in the claims at the conclusion of the specification. The foregoing and other features, and advantages of the disclosure are apparent from the following detailed description taken in conjunction with the accompanying drawings in which:
FIG. 1 is a schematic diagram of an aircraft engine in accordance with embodiments;
FIG. 2 is a perspective view of a starter air valve in accordance with embodiments;
FIG. 3 is a side view of the starter air valve in an operational mode;
FIG. 4 is an axial view of a valve body taken along line 4-4 of FIG. 2;
FIG. 5 is a circumferential view of the valve body taken along line 5-5 of FIG. 4;
FIG. 6 is a cutaway side view of the valve body and a heating element in accordance with embodiments; and
FIG. 7 is a side view of a valve plate heating element and a coupling in accordance with embodiments.

The detailed description explains embodiments of the disclosure, together with advantages and features, by way of example with reference to the drawings.

### DETAILED DESCRIPTION OF THE DISCLOSURE

A problem with the drainage features of starter air valves of aircraft engines is that the drainage features often permit air leakage when the valves are closed. This reduces efficiencies of the engines and their associated system. Thus, as will be described below, a starter air valve is provided in which electric heat is used to melt ice that would otherwise prevent the starter air valve from opening prior to start-up of the engine. Such use of electric heat allows for the starter air valve to not have need for drainage features and so will decrease leakage when the starter air valve is in the closed position thus increasing system efficiency. The use of the electric heat could be applicable and used in any pneumatic valve environment where ice build-up could occur inside the valve and prevent the valve from opening.

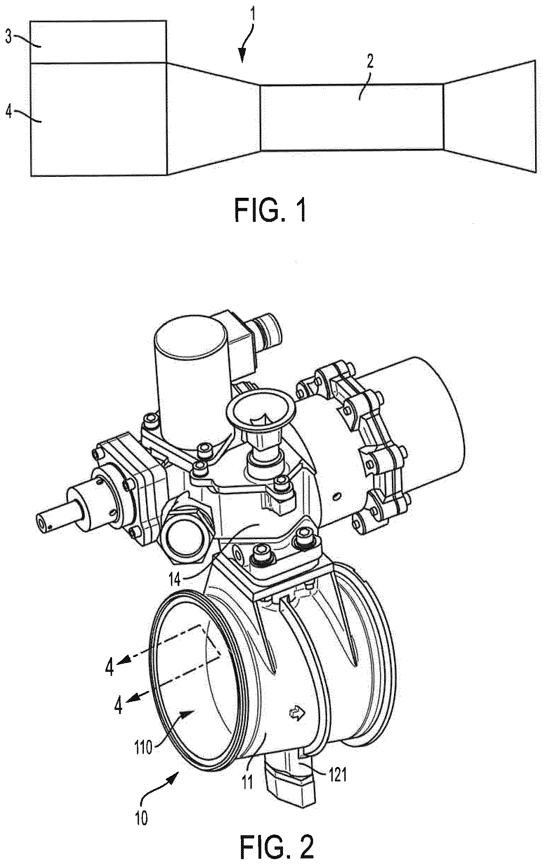

With reference to FIG. 1, an engine 1 is provided for use with an aircraft or another similar machine. The engine includes a gas turbine engine section 2 and a starter 3 which is configured to start the gas turbine engine section 2. The gas turbine engine section 2 has a compressor that compresses inlet air, a combustor in which the compressed inlet air is mixed with fuel and combusted and a turbine in which high temperature and high pressure fluids produced by the combustion are expanded. The turbine is coupled to a rotor which is turned by the expansion of the high temperature and high pressure fluids and the rotor, in turn, turns the compressor.

During start-up operations of the engine 1 and before the turbine is up to speed, the starter 3 is coupled to the gas turbine engine section 2 and thereby turns the rotor and the compressor. Such operation of the starter requires airflow to be modulated by a starter air valve 4 disposed upstream from the starter 3. In many cases, the starter air valve 4 is oriented substantially vertically within the engine 1 and thus tends to collect water therein due to condensation. This water can freeze if the surrounding air is cold enough (e.g., if the associated aircraft is parked overnight in cold weather) with the resulting ice potentially preventing the starter air valve 4 from opening during engine 1 start-up operations.

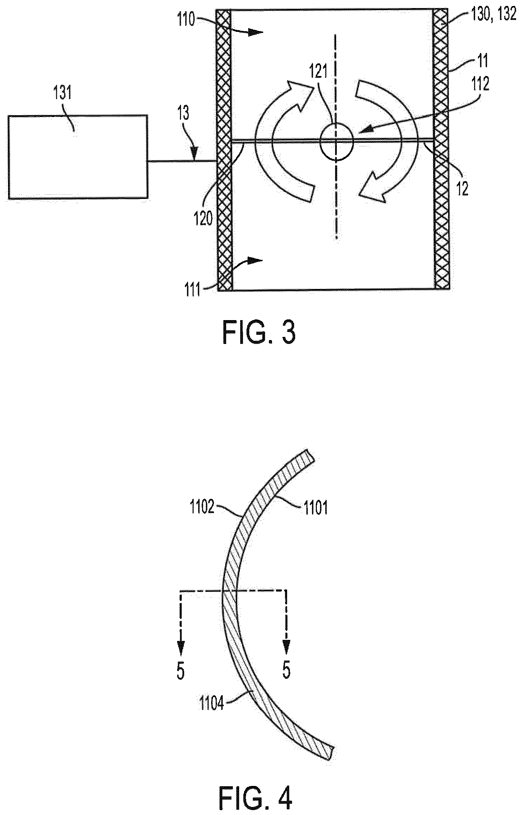

Thus, with reference to FIGS. 2 and 3, a heated valve 10 is provided and may be configured as a heated starter air valve for use in the starter 3 of the engine 1 of FIG. 1 or in any pneumatic valve environment. In any case, the heated valve 10 includes a valve body 11, a valve element 12 and a heating system 13. The valve body 11 has an inlet section 110, an outlet section 111 downstream from the inlet section 110 and a valve section 112 which is fluidly interposed between the inlet section 110 and the outlet section 111. The valve element 12 is operably disposable within the valve section 112 to assume and move between at least a first (or closed) position at which fluid communication between the inlet section 110 and the outlet section 111 is prevented by the valve element 12 and a second (or open) position at which the fluid communication between the inlet section 110 and the outlet section 111 is permitted.

The heating system 13 is disposable in operable communication with at least one of the valve body 11 and the valve element 12 and is configured to melt ice that could prevent movement of the valve element 12 between the first and second positions. The heating system 13 includes at least a heating element 130 that is operably disposed within at least the valve body 11 and a power source 131. The power source 131 is coupled to and configured to activate the heating element 130 to generate heat.

The power source 131 can be a battery or some other source of electricity that supplies the heating element 130, such as a resistance wire 132 formed of metallic materials (e.g., copper), with current. This current causes the heating element 130 to heat and this heat is conducted into the valve body 11 or radiated outwardly to generally raise the temperature of the valve 11 in and around at least the valve section 112. As a result, any ice formed within the valve body 11 is melted so that the valve element 12 can freely move within the valve body 11.

In accordance with embodiments, the valve body 11 may be substantially cylindrical with the inlet section 110, the outlet section 111 and the valve section being generally annular at least in their respective interior spaces. Here, the valve element 12 may be provided as a butterfly valve including a valve plate 120 and a drive shaft 121. The drive shaft 121 is coupled with the valve plate 120 and extends through the valve body 11 to a valve actuator 14, which is coupled to an exterior of the valve body 11. The valve actuator 14 is configured to drive rotations of the drive shaft 121 about its longitudinal axis such that the drive shaft 121 drives rotational movements of the valve plate 120. The rotational movements of the valve plate 120 may be directed such that the valve plate 120 rotates from the first (or closed) position to the second (or open) position and from the second position to the first position.

In certain cases, with reference to FIG. 3, the valve body 11 may be oriented substantially vertically with the inlet section 110 above the outlet section 111 and the valve section 112. Thus, when the valve plate 120 occupies the first (or closed) position, water can collect within the valve section 112 and then pool on an upper surface of the valve plate 120. If this water freezes, the resulting ice can prevent the rotational movements of the valve plate 120 but the activation of the heating element 130 generates heat and thereby prevents such freezing and the blocking of the valve plate 120.

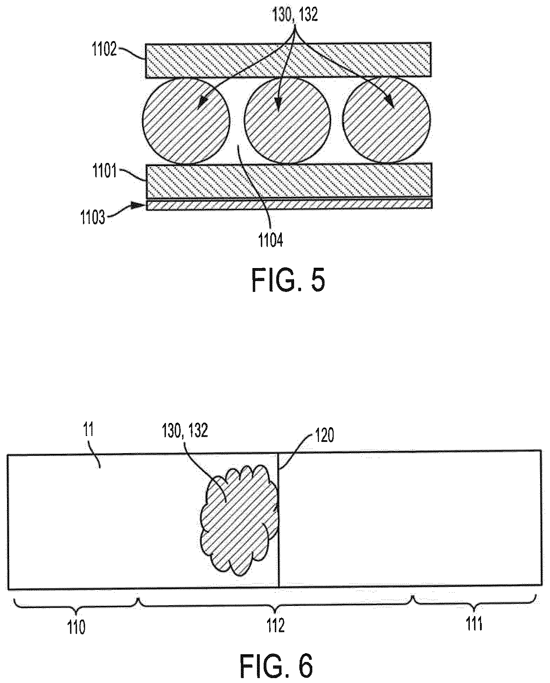

With reference to FIGS. 4 and 5, the valve body 11 includes a first layer 1101, a second layer 1102 and may include a seal ring 1103. Of the first and second layers, one would be an inner layer and the other would be an outer layer. For purposes of clarity and brevity, it will be assumed that the first layer 1101 is the inner layer and that an interior surface of the first layer 1101 forms the inlet section 110, the outlet section 111 and the valve section 112 and is annular. Thus, the second layer 1102 is disposed to surround the inner layer 1101 at a distance such that an annular space 1104 is defined between an exterior surface of the first layer 1101 and an interior surface of the second layer 1102. The heating element 130 (i.e., the resistance wire 132) is interposed between the first layer 1101 and the second layers 1102 and within the annular space 1004. In accordance with embodiments, where the heating element 130 is the resistance wire 132, a diameter or thickness of the heating element 130 may be substantially similar to that of the annular space 1104. As such, the heating element 130 and the first layer 1101 form an extended contact surface along a substantial entirety of a length of the heating element 130.The seal ring 1103 may be disposed on the interior surface of the first layer 1101 such that edges of the valve plate 120 register with the seal ring 1103 with the valve plate 120 occupying the first (or closed) position.

As shown in FIG. 5, where the heating element 130 is the resistance wire 132, a highly thermally conductive material, being foamed metallic material, is charged into the annular space 1104 to take up empty space that is not otherwise occupied by the resistance wire 132.

The first and second layers 1101 and 1102 may be formed of metallic materials or, more generally, of highly thermally conductive materials. The first and second layers 1101 and 1102 may be, but are not required to be, electrically conductive.

With reference to FIG. 6 and, in accordance with further embodiments, the heating element 130 may be disposed in the annular space 1104 at the valve section 112 upstream from the axial location of the valve plate 120 in the first (or closed) position. Where possible, the heating element 130 may also be disposed at the inlet section 110, at the valve section downstream from the axial location of the valve plate 120 and at the outlet section 111.

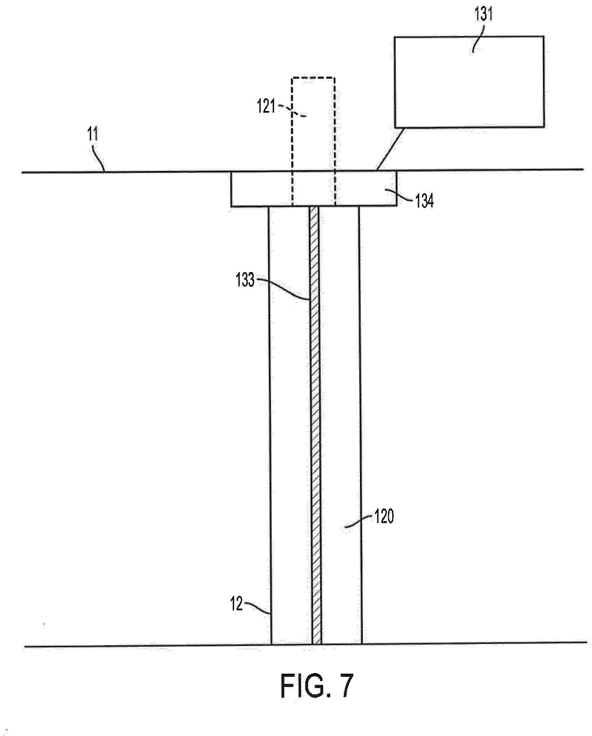

With reference to FIG. 7 and, in accordance with further embodiments in which the valve element 12 is a butterfly valve, the heating system 13 includes a valve plate heating element 133 and a coupling 134. The valve plate heating element 133 is disposed to heat the valve plate 120 similar to the way the heating element 130 heats the valve body 11. The coupling 134 is configured to electrically connect the valve plate heating element 133 and the power source 131 during movements of the valve plate 120 and may be provided as a brush ring or another similar feature.

While the disclosure is provided in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the scope of the disclosure. Additionally, while various embodiments of the disclosure have been described, it is to be understood that the exemplary embodiment(s) may include only some of the described exemplary aspects. Accordingly, the disclosure is not to be seen as limited by the foregoing description, but is only limited by the scope of the appended claims.

## Claims

1. A heated valve (4; 10), comprising:
a valve body (11) having an inlet (110), an outlet (111) downstream from the inlet (110) and a valve section (112) fluidly interposed between the inlet (110) and the outlet (111);
a valve element (12) operably disposed within the valve section (112) to assume and move between at least a first position at which fluid communication between the inlet (110) and the outlet (111) is prevented by the valve element (12) and a second position at which the fluid communication is permitted, wherein the valve element (12) comprises a valve plate (120) and a drive shaft (121) configured to drive movements of the valve plate (120); and
a heating system (13) in operable communication with at least one of the valve body (11) and the valve element (12) and configured to melt ice that could prevent movement of the valve element (12) between the first and second positions; wherein the heating system (13) comprises:
a heating element (130,132) operably disposed within at least the valve body (11);
a power source (131) coupled to and configured to activate the heating element (130,132) to generate heat;
a valve plate heating element (133) disposed to heat the valve plate (120); and
a coupling (134) configured to electrically connect the valve plate heating element (133) and the power source (131) during movements of the valve element (12); **characterised in that**
the valve body (11) comprises first and second layers (1101,1102) and the heating element (130,132) comprises a resistance wire (130,132) interposed between the first and second layers (1101,1102), wherein a highly thermally conductive foamed metallic material is charged into an annular space (1104) defined between an exterior surface of the first layer (1101) and an interior surface of the second layer (1102) to fill space not otherwise occupied by the resistance wire (132).

2. The heated valve according to claim 1, further comprising a valve actuator (14) coupled to the valve element (12) and configured to drive movements thereof.

3. The heated valve according to claim 1 or 2, wherein the valve body (11) is disposable with the inlet (110) above the outlet (111).

4. The heated valve according to any preceding claim, wherein the valve body (11) is substantially cylindrical and the valve element (12) comprises a butterfly valve.

5. The heated valve according to any preceding claim, wherein the valve body (11) further comprises a seal ring (1103) disposable on an interior surface of an innermost one of the first and second layers (1101).

## Patentansprüche

1. Beheiztes Ventil (4; 10), umfassend:
einen Ventilkörper (11), der einen Einlass (110), einen Auslass (111) stromabwärts des Einlasses (110) und einen Ventilabschnitt (112) aufweist, der fluidmäßig zwischen dem Einlass (110) und dem Auslass (111) angeordnet ist;
ein Ventilelement (12), das betätigbar innerhalb des Ventilabschnitts (112) angeordnet ist, um mindestens eine erste Position, bei der die Fluidkommunikation zwischen dem Einlass (110) und dem Auslass (111) durch das Ventilelement (12) verhindert wird, und einer zweiten Position, bei der die Fluidkommunikation zugelassen wird, anzunehmen und sich zwischen diesen zu bewegen, wobei das Ventilelement (12) eine Ventilplatte (120) und eine Antriebswelle (121) umfasst, die konfiguriert ist, um die Bewegungen der Ventilplatte (120) anzutreiben; und
ein Heizsystem (13), das in Wirkverbindung mit mindestens einem aus dem Ventilkörper (11) und dem Ventilelement (12) steht und konfiguriert ist, um Eis zu schmelzen, das die Bewegung des Ventilelements (12) zwischen der ersten und der zweiten Position verhindern könnte; wobei das Heizsystem (13) Folgendes umfasst:
ein Heizelement (130, 132), das betätigbar innerhalb mindestens des Ventilkörpers (11) angeordnet ist;
eine Energiequelle (131), die mit dem Heizelement (130, 132) gekoppelt ist und konfiguriert ist, um dieses zu aktivieren, um Wärme zu erzeugen;
ein Ventilplattenheizelement (133), das angeordnet ist, um die Ventilplatte (120) zu erwärmen; und
eine Kupplung (134), die konfiguriert ist, um das Ventilplattenheizelement (133) und die Energiequelle (131) während Bewegungen des Ventilelements (12) elektrisch zu verbinden; **dadurch gekennzeichnet, dass**
der Ventilkörper (11) eine erste und eine zweite Schicht (1101, 1102) umfasst und das Heizelement (130, 132) einen Widerstandsdraht (130, 132) umfasst, der zwischen der ersten und der zweiten Schicht (1101, 1102) angeordnet ist, wobei ein thermisch hochleitfähiges geschäumtes metallisches Material in einen ringförmigen Raum (1104), der zwischen einer Außenfläche der ersten Schicht (1101) und einer Innenfläche der zweiten Schicht (1102) definiert ist, eingebracht ist, um den Raum zu füllen, der nicht anderweitig durch den Widerstandsdraht (132) belegt ist.

2. Beheiztes Ventil nach Anspruch 1, ferner umfassend ein Ventilstellglied (14), das mit dem Ventilelement (12) gekoppelt ist und konfiguriert ist, um dessen Bewegungen anzutreiben.

3. Beheiztes Ventil nach Anspruch 1 oder 2, wobei der Ventilkörper (11) mit dem Einlass (110) über dem Auslass (111) angeordnet werden kann.

4. Beheiztes Ventil nach einem der vorstehenden Ansprüche, wobei der Ventilkörper (11) im Wesentlichen zylindrisch ist und das Ventilelement (12) ein Drosselklappenventil umfasst.

5. Beheiztes Ventil nach einem der vorstehenden Ansprüche, wobei der Ventilkörper (11) ferner einen Dichtungsring (1103) umfasst, der an einer Innenfläche einer innersten aus der ersten und der zweiten Schicht (1101) angeordnet werden kann.

## Revendications

1. Soupape chauffée (4 ; 10), comprenant :
un corps de soupape (11) ayant une entrée (110), une sortie (111) en aval de l'entrée (110) et une section de soupape (112) interposée de manière fluidique entre l'entrée (110) et la sortie (111) ;
un élément de soupape (12) disposé de manière opérationnelle à l'intérieur de la section de soupape (112) pour prendre et se déplacer entre au moins une première position dans laquelle la communication de fluide entre l'entrée (110) et la sortie (111) est empêchée par l'élément de soupape (12) et une seconde position dans laquelle la communication de fluide est autorisée, dans laquelle l'élément de soupape (12) comprend une plaque de soupape (120) et un arbre d'entraînement (121) configuré pour entraîner des mouvements de la plaque de soupape (120) ; et
un système de chauffage (13) en communication opérationnelle avec au moins l'un du corps de soupape (11) et de l'élément de soupape (12) et configuré pour faire fondre la glace qui pourrait empêcher le mouvement de l'élément de soupape (12) entre les première et seconde positions ; dans laquelle le système de chauffage (13) comprend :
un élément chauffant (130, 132) disposé de manière opérationnelle à l'intérieur d'au moins le corps de soupape (11) ;
une source d'alimentation (131) couplée à l'élément chauffant (130, 132) et configurée pour l'activer afin de générer de la chaleur ;
un élément chauffant de plaque de soupape (133) disposé pour chauffer la plaque de soupape (120) ; et
un couplage (134) configuré pour relier électriquement l'élément chauffant de plaque de soupape (133) et la source d'alimentation (131) pendant des mouvements de l'élément de soupape (12) ; **caractérisée en ce que**
le corps de soupape (11) comprend des première et seconde couches (1101, 1102) et l'élément chauffant (130, 132) comprend un fil de résistance (130, 132) interposé entre les première et seconde couches (1101, 1102), dans laquelle un matériau métallique expansé à haute conductivité thermique est chargé dans un espace annulaire (1104) défini entre une surface extérieure de la première couche (1101) et une surface intérieure de la seconde couche (1102) afin de remplir l'espace non occupé autrement par le fil de résistance (132).

2. Soupape chauffée selon la revendication 1, comprenant en outre un actionneur de soupape (14) couplé à l'élément de soupape (12) et configuré pour entraîner des mouvements de celui-ci.

3. Soupape chauffée selon la revendication 1 ou 2, dans laquelle le corps de soupape (11) peut être disposé avec l'entrée (110) au-dessus de la sortie (111).

4. Soupape chauffée selon une quelconque revendication précédente, dans laquelle le corps de soupape (11) est sensiblement cylindrique et l'élément de soupape (12) comprend une soupape à papillon.

5. Soupape chauffée selon une quelconque revendication précédente, dans laquelle le corps de soupape (11) comprend en outre une bague d'étanchéité (1103) pouvant être disposée sur une surface intérieure de l'une des première et seconde couches (1101) la plus intérieure.
